Europäisches Patentamt

European Patent Office

Office européen des brevets

(19)

(11) Veröffentlichungsnummer : **0 096 005**
**B1**

(12)

# EUROPÄISCHE PATENTSCHRIFT

(45) Veröffentlichungstag der Patentschrift :
30.07.86

(51) Int. Cl.⁴ : **F 16 K 11/06**, F 16 K 11/18

(21) Anmeldenummer : 83810217.6

(22) Anmeldetag : 24.05.83

(54) Einhebel-Mischarmatur zur Steuerung der Abgabemenge und des Mischverhältnisses von warmem und kaltem Wasser.

(30) Priorität : 28.05.82 CH 3304/82

(43) Veröffentlichungstag der Anmeldung :
07.12.83 Patentblatt 83/49

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
CH-A-  284 028
FR-A- 2 041 861
FR-A- 2 199 387
FR-A- 2 301 756
FR-A- 2 403 502
FR-A- 2 415 769
US-A- 3 098 503

(73) Patentinhaber : Simeg-Brevet AG
Mellingerstrasse 10
CH-5443 Niederrohrdorf (CH)

(72) Erfinder : Isler, Eugen
Römerweg 29
CH-5443 Niederrohrdorf (CH)
Erfinder : Heimgartner Alois
Mülimattstrasse 5
CH-5443 Niederrohrdorf (CH)
Erfinder : Bernardoni, Alois
Chemin des Fraisiers 21
CH-1212 Grand-Lancy (CH)

(74) Vertreter : Frauenknecht, Alois J. et al
c/o PPS Polyvalent Patent Service AG Fohrhölzlistrasse 19
CH-5443 Niederrohrdorf (CH)

**Beschreibung**

Die vorliegende Erfindung bezieht sich auf eine Einhebel-Mischarmatur zur Steuerung der Abgabemenge und des Mischverhältnisses von warmem und kaltem Wasser mit einer feststehenden Steuerplatte, welche zwei, je mit der Warmwasser- und der Kaltwasserzuleitung in Verbindung stehende Durchlässe aufweist und auf welcher ein relativ zu dieser Steuerplatte beweglicher Steuerkörper mit ebenfalls zwei Durchlässen angeordnet ist, welcher durch einen um eine Welle kippbaren Kipphebel und einen am Kipphebel vorgesehenen drehbaren Handgriff mittels eines in der Art eines Betätigungsfingers ausgeführten Teils bewegbar ist, wobei zwischen dem Steuerkörper und dem inneren, im Kipphebel gelagerten Teil des drehbaren Handgriffes Getriebeelemente zwischengeschaltet sind, welche die Umwandlung des Drehwinkels des Handgriffes in eine lineare Bewegung des Steuerkörpers ergeben, wobei der Kippwinkel des Kipphebels zur Steuerung einer zweiten, zu der genannten linearen Bewegung senkrechten Komponente der Bewegung des Steuerkörpers bestimmt ist.

Die Mischarmaturen dieser Art sind an sich bekannt. In der FR-A-2 415 769 ist eine Mischarmatur der oben angegebenen Art beschrieben und dargestellt. Bei dieser Mischarmatur wird als das Übertragungselement zwischen dem kippbaren und drehbaren Handgriff ein Kugelgelenk verwendet, das zwischen zwei Platten mit entsprechenden kugelartigen Ausnehmungen gelagert ist. Dieses Kugelgelenk weist zwei, in gegenseitige Richtungen sich erstreckende Stiften auf, die je mit einem abgerundeten Ringflansch am äusseren Ende versehen sind. Diese zwei abgerundeten Ringflansche greifen in entsprechende zylindrische Ausnehmungen ein, wobei eine der Ausnehmungen in einem Körper angeordnet ist, der durch die Kipp- oder Drehbewegung des Handgriffes gesteuert wird, und die andere Ausnehmung in einem Körper ausgeführt ist, der die Lage der beweglichen Platte in bezug auf die unbewegliche Platte mit den Wasseranschlüssen steuert.

Die Aufgabe der Erfindung besteht darin, eine Mischarmatur der eingangs genannten Art zu schaffen, die die Bewegungsübertragung von dem Kipphebel auf den Steuerkörper so löst, dass der Verstellweg des Steuerkörpers durch eine möglichst einfache Art auf das Bedienungsorgan übertragen wird und dass die Verstellung am drehbaren Handgriff über einen möglichst grossen Weg durch Übersetzung ausgeführt werden kann. Es ist ebenfalls Aufgabe der Erfindung, eine Konstruktion zu schaffen, bei der eine Änderung der Mischtemperatur die Durchflussmenge und eine Änderung der Durchflussmenge die Mischtemperatur nicht ändern.

Die vorgenannte Aufgabe wird bei einer Mischarmatur der anfangs beschriebenen Art dadurch gelöst, dass die Getriebeelemente einen Führungskörper enthalten, der um die Welle kippbar und gleichzeitig entlang dieser Welle verschiebbar ist. Durch diese Lösung wird eine Konstruktion erreicht, die mit sehr einfachen und wirschaftlich realisierbaren Mitteln beide zueinander senkrechten Bewegungskomponenten des Steuerkörpers erzielt und die gewünschte Mischtemperatur bei einer Änderung der Durchflussmenge oder die gewünschte Durchflussmenge bei einer Änderung der Mischtemperatur konstant hält. Die Konstruktion ermöglicht, durch eine einfache und leicht durchzuführende Drehbewegung des drehbaren Handgriffs die Mischtemperatur und durch ein einfaches Kippen des Kipphebels die Durchflussmenge des Mischwassers fein einzustellen.

Es ist zweckmässig, wenn gemäss Anspruch 2 der Führungskörper mit Führungsflächen versehen ist, die sich in einer Führung des Gelenkes des Kipphebels parallel zur Welle erstrecken. Auf diese Weise wird eine verkantungsfreie Führung des Führungskörpers bewerkstelligt, woraus eine leichtgängige Einstellbarkeit der Mischtemperatur resultiert.

Nach einer vorteilhaften Ausführung gemäss Anspruch 3 bestehen die Getriebeelemente aus einem mit dem Handgriff fest verbundenen Exzenterbolzen und aus einer kulissenartigen, mit dem Exzenterbolzen zusammenwirkenden Ausnehmung im Führungskörper, wobei die Flächen des Exzenterbolzens derart ausgebildet sind, dass die Drehbewegung des Bedienungsteils kontinuierlich und wenigstens annähernd proportional in die lineare Bewegung des Steuerkörpers umgesetzt wird. Der Exzenterbolzen verschiebt den Steuerkörper entlang der Welle des Kipphebels und schafft somit die Bewegungskomponente des Steuerkörpers, die die Mischtemperatur des ausfliessenden Wassers bestimmt. Hierzu ist der Führungskörper zur Bolzenführung vorteilhafterweise mit zusätzlichen, seitlichen Flächenführungen versehen, mit welchen die Kipphebel-Bewegungen auf den Steuerkörper übertragen werden. — Durch Kippen des Kipphebels lässt sich dann die Durchflussmenge des gemischten Wassers in einfachster Weise kontinuierlich steuern.

Nach einer anderen beispielsweisen Ausgestaltung gemäss Anspruch 4 bestehen die Getriebeelemente aus einem Zahnrad und einer zugeordneten, am Führungskörper vorgesehenen Zahnstange, wobei das Zahnrad mit dem drehbaren Handgriff bewegbar ist. Die Kombination eines Zahnrads mit einer Zahnstange ermöglicht eine Bewegung des Führungskörpers entlang der Welle, wobei diese Bewegung proportional der Drehbewegung des drehbaren Handgriffes ist.

Nach einer dritten beispielsweisen Ausgestaltung der erfindungsgemässen Mischarmatur gemäss Anspruch 5 bestehen die Getriebeelemente aus einer Spindelhülse, einer Spindel mit Gleitstück und aus wenigstens einer kulissenartigen Nut, die im Gleitstück ausgebildet ist, wobei die Spindelhülse mit dem drehbaren Handgriff und die Spindel, welche in einem inneren Gewinde der Spindelhülse mit ihrem äusseren Gewinde drehbar und verschiebbar gelagert ist, mit dem Gleitstück fest verbunden sind, wobei das Gleitstück durch die Drehbewegung des drehbaren Handgriffes in einer Führung verschoben wird und die kulissenartige Nut mittels eines Bolzens mit dem Steuerkörper beweglich verbunden ist. Weil der Verlauf der kulissenartigen Nut nach Bedarf gewählt werden kann, gibt auch diese Ausführungsvariante eine Lösung, die nicht nur einfach ist, sondern auch eine konstante Mischtemperatur des ausfliessenden Wassers sichert.

Gemäss Anspruch 6 bilden dabei zweckmässigerweise die inneren Flächen des Gleitstücks Führungsflächen für den Führungskörper und sind in direktem Gleitkontakt mit diesem Führungskörper, wobei die mit der Welle parallelen Flächen des Führungskörpers Führungsflächen bilden. Daraus ergibt sich der Vorteil einer einfachen, weitgehend spielfreien Führung.

Es ist zweckmässig, wenn nach Anspruch 7 die feststehende Steuerplatte mit zwei rechteckigen Durchlässen für Kalt- und Warmwasser versehen ist und wenn sich die rechteckigen Profile der Durchlässe mit ihren Abgrenzungslinien in der Richtung der zueinander senkrechten Bewegungskomponenten des Steuerkörpers erstrecken. Diese Ausführung ergibt eine proportionale Steuerung sowohl des Kaltwasser- als auch des Warmwasser-Durchlasses.

Um der Bedienung die Übersicht über die Manipulation mit der Einhebel-Mischarmatur zu erleichtern, ist es gemäss Anspruch 8 zweckmässig, wenn der drehbare Handgriff mit einer Nase für die Anzeige der Temperatureinstellung versehen ist. Dies ermöglicht festzustellen, auf welche Temperatur zur Zeit die Einhebel-Mischarmatur eingestellt ist. Zusätzlich kann man auch unterhalb des drehbaren Handgriffes z. B. eine farbige Bezeichnung anordnen (blau für kalt — rot für warm).

Um klar zu machen, mit welcher Bewegung des Kipphebels man die Durchflussmenge einstellt, ist gemäss Anspruch 9 der Kipphebel unterhalb des drehbaren Handgriffes mit einem Orientierungshebel für die Anzeige der Kippbewegung für die Durchflussmengeneinstellung versehen. Dieser Orientierungshebel ist mit dem Kipphebel fest verbunden bzw. einstückig ausgeführt, so dass er zwar zur Betätigung des Kipphebels dienen kann, aber nicht muss. Es besteht die Möglichkeit, den Kipphebel nur über den drehbaren Handgriff einzustellen und zwar durch die Drehung die Temperatur des Mischwassers und durch das Kippen die Durchflussmenge.

Der Erfindungsgegenstand wird im folgenden anhand von mehreren Beispielen näher erläutert.

Es zeigt:

Figur 1 eine erste beispielsweise Ausgestaltung des Erfindungsgegenstandes in teilweisem Schnitt, wobei die Getriebeelemente aus einem Exzenterbolzen und aus einer kulissenartigen Ausnehmung bestehen, die in einem Führungskörper ausgebildet ist,

Figur 2 den Schnitt-II-II aus Fig. 1,

Figur 3 eine zweite beispielsweise Ausführungsvariante gemäss der Erfindung, wobei die Getriebeelemente im wesentlichen aus einem Zahnrad und einer Zahnstange bestehen,

Figur 4 eine dritte beispielsweise Ausführungsmöglichkeit gemäss der Erfindung, bei der die Getriebeelemente im wesentlichen aus einem Gleitstück mit einer kulissenartigen Nut bestehen, in welche eine oder mehrere Bolzen eingreifen, die mit dem Führungskörper fest verbunden sind,

Figur 5 dieselbe Lösung, die in Fig. 4 gezeigt ist, jedoch in einem anderen teilweisen Schnitt, der senkrecht zu dem in der Fig. 4 gezeigten Schnitt verläuft,

Figur 6 eine vierte beispielsweise Ausführungsmöglichkeit der Erfindung, bei der die Getriebeelemente aus einem Exzenterbolzen und aus einer kulissenartigen Ausnehmung bestehen, wobei der Kipphebel wegen der Übersichtlichkeit unterhalb des drehbaren Handgriffes mit einem Orientierungshebel versehen ist,

Figur 7 den Schnitt VII-VII aus der Fig. 6,

Figur 8 ein Diagramm, das die Abhängigkeit der Temperatur von der Drehung des drehbaren Handgriffes zeigt, und

Figur 9 ein weiteres Diagramm mit der Abhängigkeit der Durchflussmenge von dem Kippwinkel des Kipphebels.

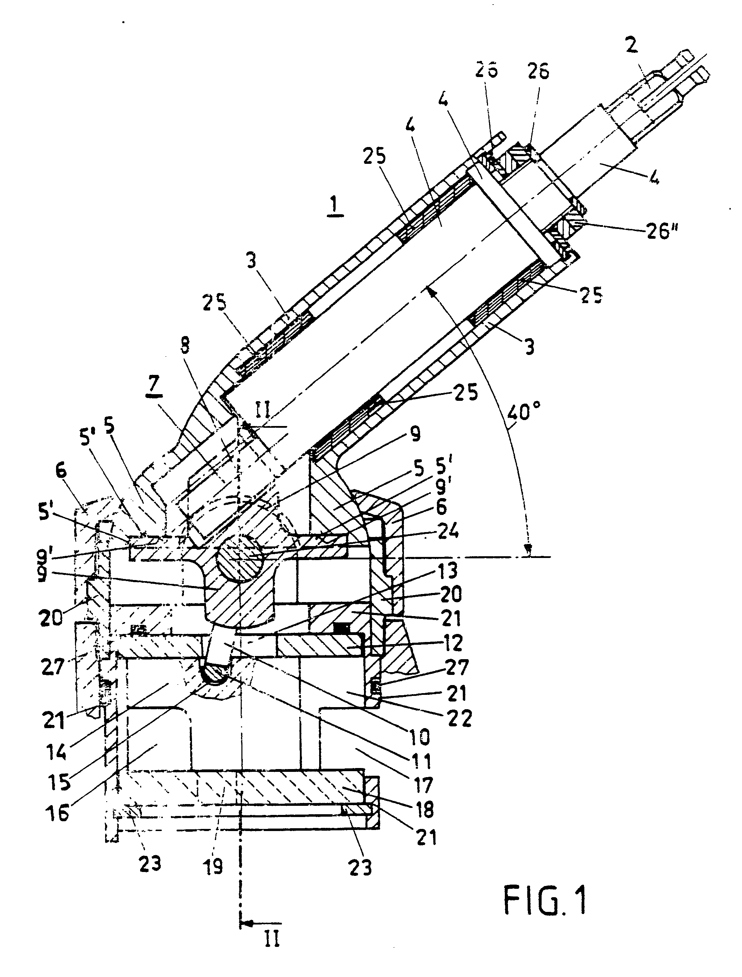

Gemäss Fig. 1 besteht ein Kipphebel aus einem Befestigungsteil 2 für einen drehbaren Handgriff, aus einem äusseren Teil 3 und einem inneren, drehbar gelagerten Teil 4. Der Kipphebel 1 ist mit einem Gelenk 5 in einer Gewindekalotte 6 gelagert. Mit der Bezugsziffer 7 sind Getriebeelemente für die Bewegungsübertragung bezeichnet, die in diesem Ausführungsbeispiel im wesentlichen aus einem Exzenterbolzen 8 und einer kulissenartigen Ausnehmung 8′ in einem Führungskörper 9, der seitliche Flächenführungen 9′ aufweist, bestehen. In diesem Führungskörper 9 ist ein Mitnehmer 10 befestigt, dessen unterer Teil mit der Bezugsziffer 11 bezeichnet ist. In einer Dichtungsplatte 12 ist eine Ausnehmung 13 für den Mitnehmer 10 ausgeführt. Der horizontale Teil 11 des Mitnehmers 10 greift in eine Lagerung 15 eines Steuerkörpers 14 ein. Der Steuerkörper 14 ist mit zwei Ausnehmungen 16 versehen, die für den Kaltwasser- und Warmwasser-Durchfluss bestimmt sind. In der Fig. 1 ist nur eine dieser zwei Ausnehmungen 16 sichtbar. Mit der Bezugsziffer 17 ist ein Ausflussraum der Armatur bezeichnet. Der Steuerkörper 14 ist verschiebbar zwischen der Dichtungsplatte 12 und einer feststehenden Steuerplatte 18 gelagert. In dieser feststehenden Steuerplatte 18 sind zwei Durchlässe für die Wasserzuleitung ausgeführt, wobei in der Fig. 1 nur ein Durchlass 19 für die Kaltwasserzuleitung dargestellt ist. Der Führungskörper 9 bewegt sich in einer Niederhalterung 20 des Gehäuses 21, der Steuerkörper 14 im Gehäuse 21. In diesem Gehäuse 21 ist auch ein Mischraum 22 vorgesehen. Mit der Bezugsziffer 23 ist ein Ring für die Halterung der feststehenden Steuerplatte 18 bezeichnet. Eine Welle 24 für die Lagerung des Kipphebels 1 mittels des Führungskörpers 9 hat eine doppelte Aufgabe. Erstens dient sie als Kippachse für den Kipphebel 1, zweitens trägt sie den Führungskörper 9, der auf dieser Welle in der Längsrichtung dieser Welle 24 verschiebbar ist. Die an sich bekannten Lagerbüchsen, Befestigungsringe und Dichtungsringe sind mit den Bezugsziffern 25, 26 und 27 bezeichnet, wobei Anschlagringe 26" den Drehwinkel des drehbaren Griffes begrenzen.

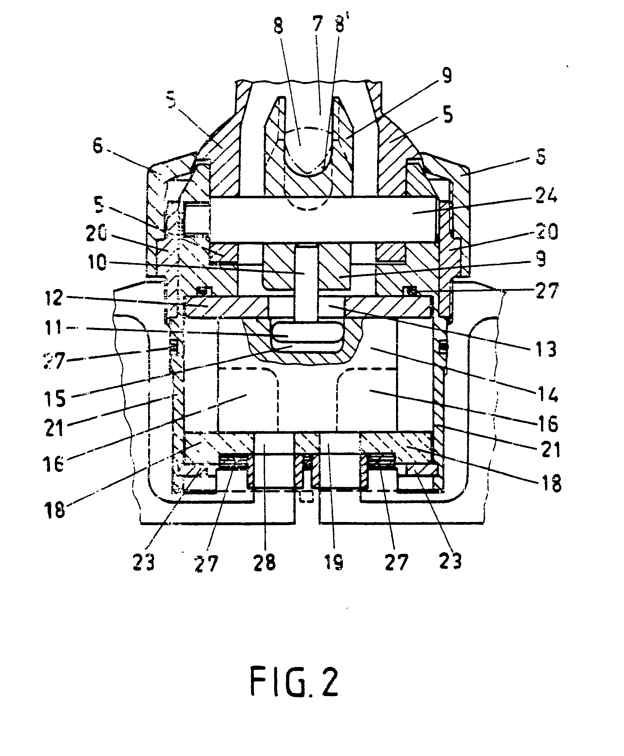

Der in der Fig. 2 gezeigte teilweise Schnitt II-II aus der Fig. 1 zeigt anschaulich den Steuerkörper 14, der mit zwei Ausnehmungen 16 versehen ist. Der mittlere Teil des Steuerkörpers 16 schliesst teilweise die Durchlässe 19 und 28 für die Kaltwasser-Zuleitung und Warmwasser-Zuleitung. In dieser Lage des Steuerkörpers 14 wird also das Kaltwasser mit dem Warmwasser in einem Verhältnis 1 : 1 gemischt. Nach einer Verschiebung des Steuerkörpers 14 nach links wird der Durchlass 19 für die Kaltwasser-Zuleitung mehr geöffnet und in gleicher Weise der Durchlass 28 für die Warmwasser-Zuleitung mehr geschlossen. Das Mischverhältnis des kalten und des warmen Wassers wird somit geändert, und in diesem Fall erhalten wir am Ausfluss kälteres Wasser. Wie aus der Fig. 2 gut ersichtlich ist, wird die Schiebebewegung des Steuerkörpers 14 nach links oder nach rechts durch den horizontalen Teil 11 des Mitnehmers 10 bewirkt. Diese Bewegung geschieht in der Ausnehmung 13 in der Dichtungsplatte 12. Weil der Mitnehmer 10 im Führungskörper 9 fest angeordnet ist, kann er auch eine Bewegung von diesem Körper ableiten. Wie schon früher erwähnt, ist der Führungskörper 9 auf der Welle 24 in der Längsrichtung dieser Welle also nach links und nach rechts gemäss der Fig. 2 verschiebbar. Diese Verschiebung erfolgt durch den Exzenterbolzen 8, der in die kulissenartige Ausnehmung 8' eingreift. Der Exzenterbolzen 8 ist mit dem inneren drehbaren Teil des Kipphebels 1 verbunden, der aus der Fig. 1 ersichtlich ist. Durch die Drehung des Exzenterbolzens 8 wird der Führungskörper 9 entweder nach links oder nach rechts entlang der Welle 24 und den Flächenführungen 9' geführt, wobei sich diese Bewegung über den Mitnehmer 10, 11 auf den Steuerkörper 14 überträgt.

Der Exzenterbolzen 8 ist mit einem im wesentlichen dreieckigen Profil ausgeführt, wobei die Seitenflächen und die Spitzen des Dreiecks derart abgerundet sind, dass diese ein gleichdickes Profil bilden, was die Linearität der Bewegungsübertragung verbessert.

Die Welle 24 ist in einem Lagerkörper 29 drehbar befestigt. Aus der oben erwähnten Beschreibung sieht man, dass die Kippbewegung des Kipphebels 1 die Bewegungskomponente des Steuerkörpers 14 über die Flächenführungen 9' in der Richtung von hinten nach vorne und umgekehrt bewirkt, wobei die Durchflussmenge, sowohl des kalten als auch des warmen Wassers, geregelt wird und dass die Drehbewegung des drehbaren Handgriffes eine Bewegungskomponente des Steuerkörpers 14 von links nach rechts oder umgekehrt verursacht, womit das Mischverhältnis des kalten und des warmen Wassers gewählt wird.

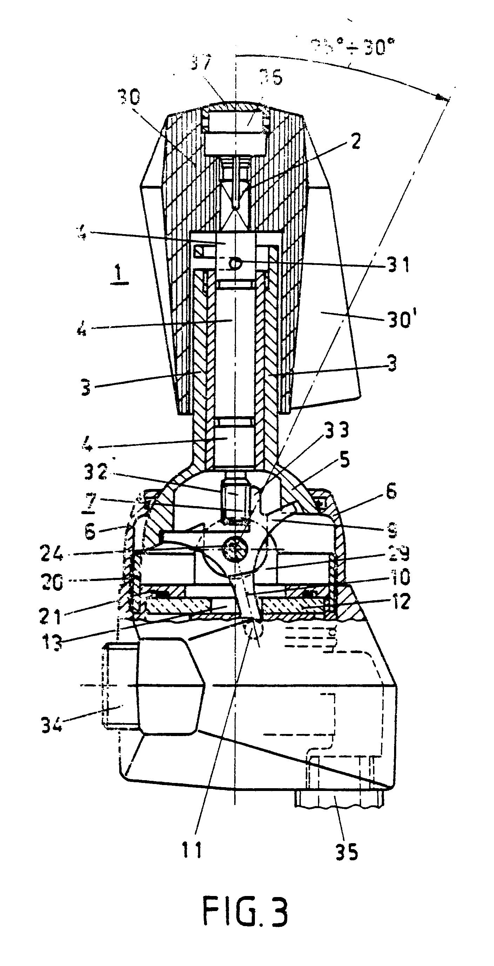

In Fig. 3 ist eine weitere beispielsweise Ausgestaltung der Erfindung im teilweisen Schnitt gezeigt, wobei die Getriebeelemente 7 im wesentlichen aus einem Zahnrad 32 und einer Zahnstange 33 bestehen. In dieser Zeichnung ist auch ein Schnitt durch den drehbaren Handgriff 30 gezeigt, der mittels Befestigungselemente 31 mit dem inneren, drehbaren Teil 4 des Kipphebels 1 verbunden und mit einer Nase 30' versehen ist, die der Orientierung des Benützers über die eingestellte Temperatur dient. Die Zahnstange 33 bildet einen Bestandteil des Führungskörpers 9, der gleich wie bei der ersten Lösung über Führungsflächen entlang der Welle 24 geschoben werden kann. Auch bei dieser Lösung ist ein Mitnehmer 10 mit seinem unteren Teil 11 gezeigt. Weitere Teile wie z. B. der Steuerkörper 14, die feststehende Steuerplatte 18 und die dazugehörigen Durchlässe 19 und 28 werden in dieser Zeichnung nicht gezeigt, weil sie der Lösung gemäss der Fig. 1 und der Fig. 2 entsprechen. Ein Anschlussrohr 34 für Warmwasser bildet einen Teil des Gehäuses des Mischkopfes. Im unteren Teil des Mischkopfes ist ein Ausflussstutzen 35 gezeigt. In dem drehbaren Handgriff 30 ist eine Befestigungsbohrung 36 ausgebildet, die mit einer Kappe 37 verschlossen ist.

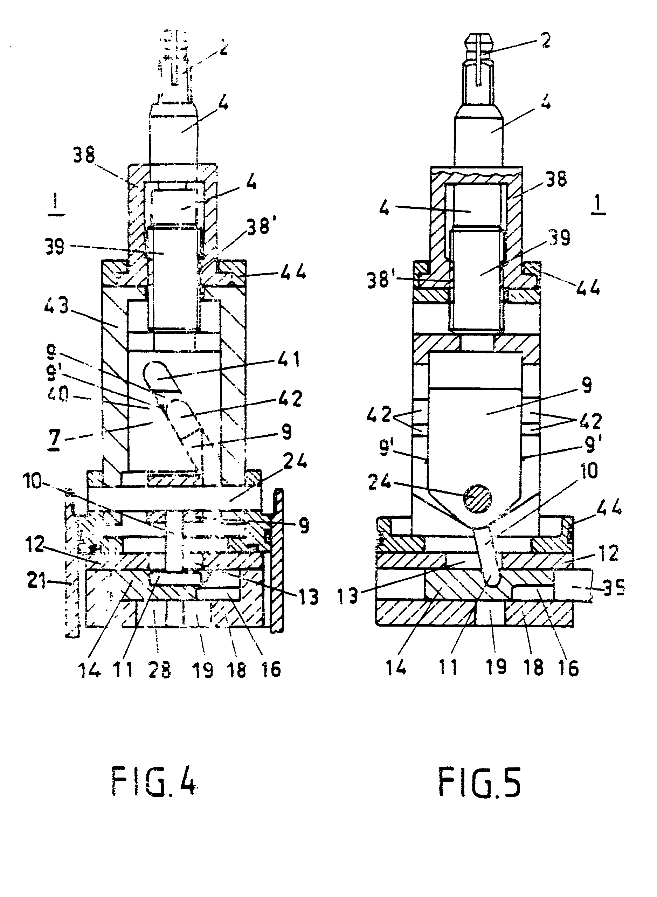

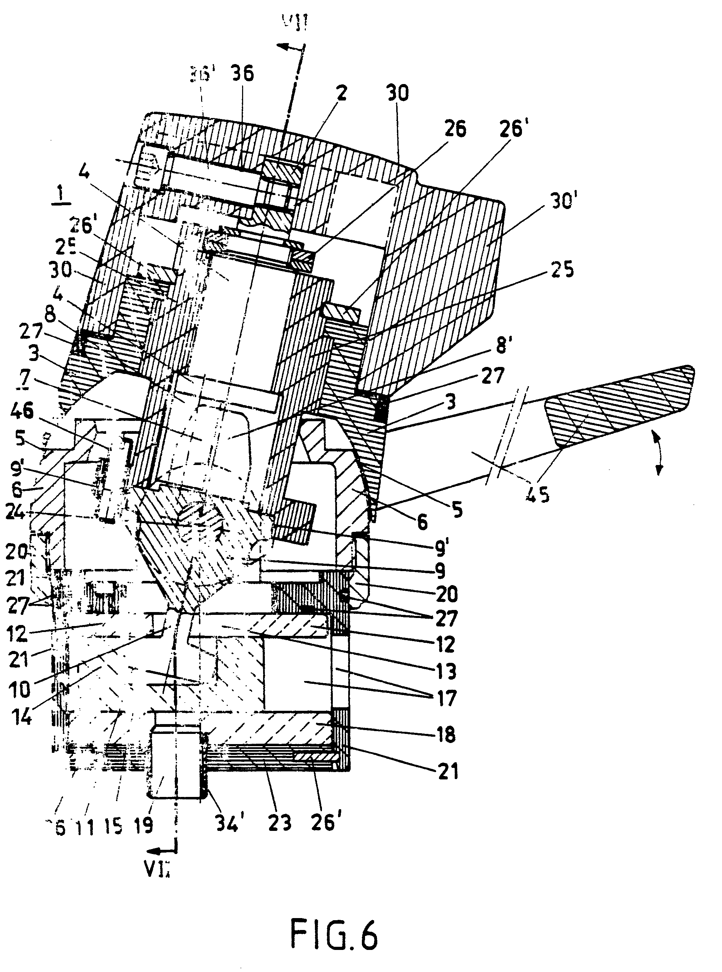

Die Fig. 4 und die Fig. 5 zeigen zwei gegenseitig senkrechte Schnitte durch eine dritte beispielsweise Ausführungsform des Erfindungsgegenstandes. Auch in diesen zwei Zeichnungen sind gleiche Teile mit denselben Bezugsziffern bezeichnet wie in der Fig. 1 bzw. Fig. 2. Es gibt da jedoch einige Unterschiede. Der innere, drehbar gelagerte Teil 4 des Kipphebels 1 ist mit einer Spindelhülse 38 fest verbunden, die selbstverständlich ebenfalls drehbar gelagert ist. Innerhalb dieser Spindelhülse 38 befindet sich eine Spindel 39, die in ein Gewinde 38' im inneren Teil der Spindelhülse 38 eingreift. Wenn man also mit dem inneren, drehbaren Teil 4 dreht, dreht sich auch die Spindelhülse 38 und bewegt die Spindel 39 in der zugehörigen Richtung, das bedeutet entweder aufwärts oder nach unten. Die Spindel 39 ist mit einem Gleitstück 40 fest verbunden, das hohl ausgebildet ist und auf zwei einander gegenüberliegenden Seiten je eine Nut 41 aufweist. In diese kulissenartig ausgebildete Nut 41 im Gleitstück 40 greift auf beiden Seiten je ein Bolzen 42 ein, der mit dem Führungskörper 9 fest verbunden ist. Das Gleitstück 40 ist in einer äusseren Führung 43 gelagert. Es weist eine innere Führung auf, die in direktem Kontakt mit den Führungsflächen 9' des Führungskörpers 9 steht. Somit ist eine formschlüssige Bewegung des Führungskörpers 9 entlang der Welle 24 in beiden Richtungen gewährleistet. Verschiedene, an sich bekannte Befestigungsteile sind allgemein mit der Bezugsziffer 44 bezeichnet. Auch die Funktionsweise dieser dritten beispielsweisen Ausführungsform ist sehr einfach. Durch eine Drehbewegung des inneren, drehbar gelagerten Teiles 4 wird die Spindel 39 z. B. nach unten geschoben. Somit bewegt sich das Gleitstück 40 nach unten und der kulissenartig geführte Bolzen 42 nach links. Weil dieser Bolzen 42 fest mit dem Führungskörper 9 verbunden ist, bewegt sich auch dieser Führungskörper 9 entlang der Welle 24 nach links und dreht auch den Mitnehmer 10 mit seinem unteren Teil 11 in dieser Richtung und beeinflusst somit die Bewegung des Steuerkörpers 14. Der Steuerkörper 14 ist auch in der Fig. 4 in der zentralen Lage gezeichnet. Rechts ist die Ausnehmung 16 sichtbar, die teilweise den Durchlass 19 für die Kaltwasser-Zuleitung verschliesst. Nach der Linksbewegung des Steuerkörpers 14 wird der Durchlass 19 mehr geöffnet und dementsprechend der Durchlass 28 für die Warmwasser-Zuleitung mehr geschlossen. Somit erreicht man, dass das ausfliessende Wasser kälter wird. Bei einer Drehbewegung des inneren Teiles 4 des Kipphebels 1 in der umgekehrten Richtung erreicht man die Schiebebewegung des Führungskörpers 9 und somit auch des Steuerkörpers 14 nach rechts, und somit wird das ausfliessende Wasser wärmer.

In der Fig. 5 ist hauptsächlich der Führungskörper 9 dargestellt, der sich im Inneren des in Fig. 4 gezeigten Gleitstückes 40 befindet. Dieser Führungskörper 9 ist beidseitig mit je einem Bolzen 42 versehen, dessen Lage in der kulissenartigen Nut 41 des Gleitstückes 40 aus der Fig. 4 ersichtlich ist.

Die Fig. 6 zeigt eine andere Ausführungsform. Diese Ausführungsform entspricht im wesentlichen der Konstruktiven Lösung gemäss den Figuren 1 und 2. Es ist ebenfalls ein Exzenterbolzen 8 verwendet, der in einer kulissenartigen Ausnehmung 8' gelagert ist und durch die Drehung des drehbaren Handgriffes 30 betätigt wird. Durch diese Drehung wird also der Führungskörper 9 mit dem Mitnehmer 10 entlang der Welle 24 bewegt und somit die Temperatur eingestellt. Zusätzlich zu den schon früher beschriebenen Teilen ist in dieser beispielsweisen Konstruktion der Kipphebel 1 unterhalb des drehbaren Handgriffes 30 mit einem Orientierungshebel 45 versehen. Man kann zwar diesen Hebel zum Kippen verwenden, dies ist jedoch nicht seine Hauptaufgabe. Das Kippen des Kipphebels 1 kann man auch von Hand mit Anfassen des drehbaren Handgriffes 30 erreichen. Somit kann man sowohl die Temperatur als auch die Durchflussmenge des Wassers einstellen, ohne den Orientierungshebel 45 zu berühren. Mit der Bezugsziffer 46 ist eine Anschlagschraube zur Einstellung einer gewünschten Durchflussmenge bezeichnet.

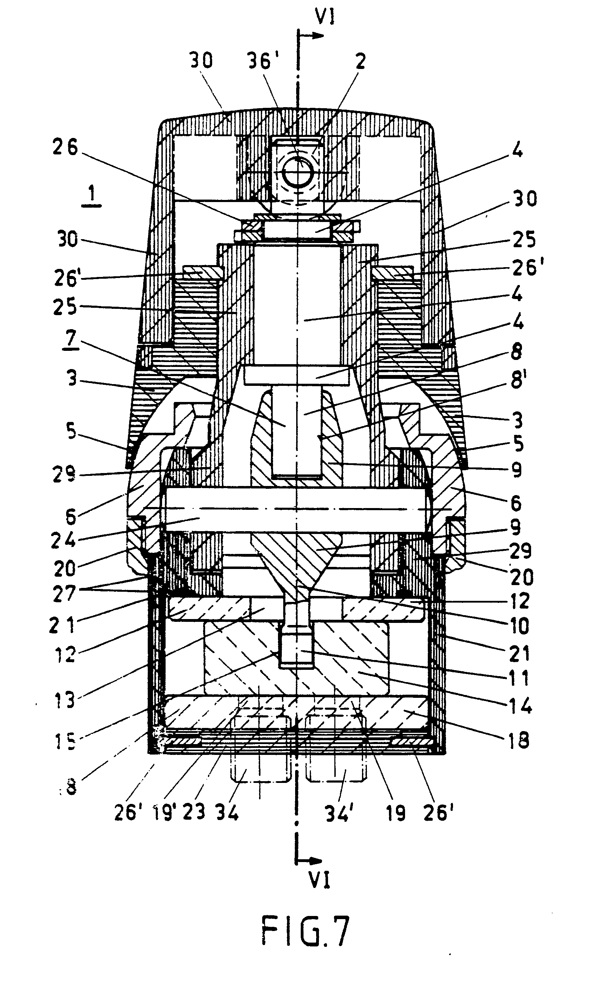

Die Fig. 7 zeigt den Schnitt VI-VI aus der Fig. 6. In dieser Figur sieht man, ähnlich wie in der Fig. 2, wie der Exzenterbolzen 8 den Führungskörper 9 mit dem Mitnehmer 10 entlang der Welle 24 bewegen kann, wobei der untere Teil 11 des Mitnehmers 10 den Steuerkörper führt. Anstelle der früher erwähnten Ringe 23 für die Halterung der feststehende Steuerplatte 18 ist hier eine scheibenförmige Platte verwendet, die ebenfalls mit der Bezugsziffer 23 versehen ist. Zusätzlich ist auf ein Durchlass für die Warmwasserzuleitung mit 19' bezeichnet. Mit 26' sind Befestigungsringe für nichtdrehbare Teile benannt. Die in der Befestigungsbohrung 36 im drehbaren Handgriff 30 angeordnete Befestigungsschraube ist durch die Ziffer 36' gekennzeichnet. Die Dichtungsplatte 12, der Steuerkörper 14 und die feststehende Steuerplatte 18 bestehen in diesem Beispiel aus Keramik, und zwar aus gesintertem Aluminiumoxid.

Die in praxi oft auftretende Bedingung einer Geräuschreduktion wird erfolgreich dadurch erreicht, dass der Steuerkörper 14 eine der Wasserströmung angepasste Form aufweist.

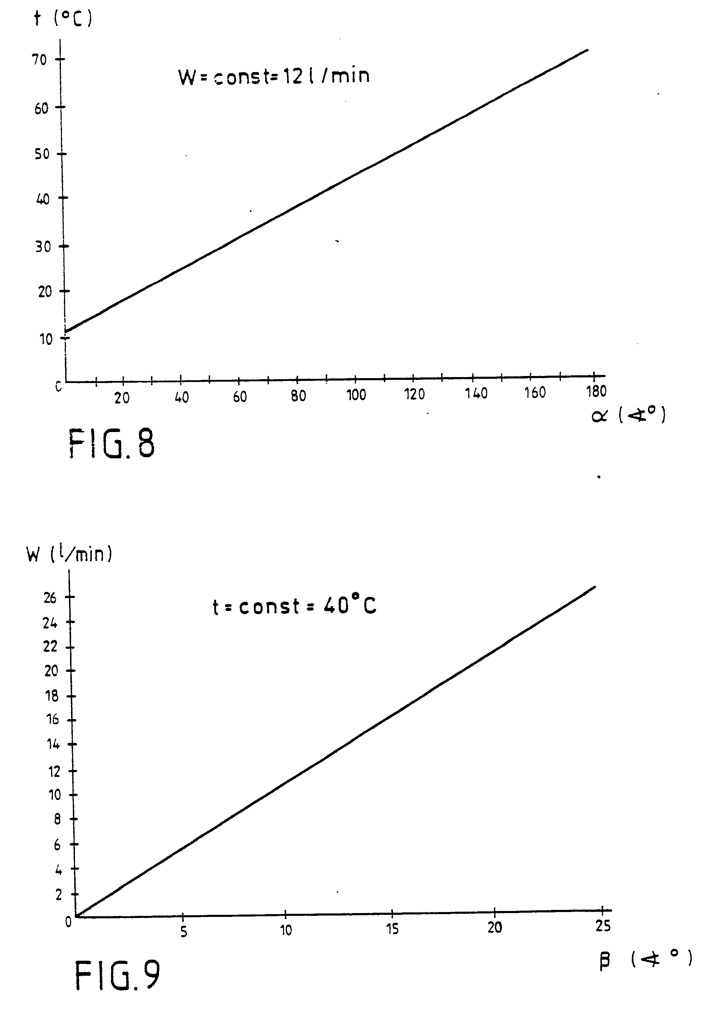

Das Diagramm gemäss Fig. 8 wurde bei einer konstanten Durchflussmenge W = 12 l/min gemessen. Es wurde mit der Stellung des drehbaren Handgriffes 30 für Kaltwasser angefangen. In diesem Fall war die Temperatur t des Kaltwassers in der Wasserleitung 12 °C. Den drehbaren Handgriff 30 kann man bei dieser Ausführungsform in einem Drehwinkel α zwischen 0 und 180° drehen. Bei dem Winkel 180° wurde die höchste Temperatur t = 70 °C erreicht, also die Temperatur t des Warmwassers. Wie aus diesem Diagramm sichtbar ist, ist die Mischtemperatur linear von dem Drehwinkel α abhängig.

Fig. 9 zeigt ein beispielsweises Diagramm für die Abhängigkeit der Durchflussmenge W von dem Kippwinkel β. Bei konstanter Temperatur t = 40 °C wurde die Durchflussmenge von 0 bis zu 26 l/min durch das Kippen des Kipphebels 1 zwischen 0 und 25° gesteigert. Wie auch aus diesem Diagramm sichtbar ist, ist die Abhängigkeit der Durchflussmenge W von dem Kippwinkel β linear.

Selbstverständlich ist der Erfindungsgegenstand nicht auf das in den Zeichnungen Dargestellte beschränkt und lässt sich auch für diverse gebräuchliche Mischventile verwenden. Es ist ebenfalls selbstverständlich, dass man die Funktionen des Kipphebels 1 und des drehbaren Handgriffs gegenseitig wechseln kann.

**Patentansprüche**

1. Einhebel-Mischarmatur zur Steuerung der Abgabemenge und des Mischverhältnisses von warmem und kaltem Wasser mit einer feststehenden Steuerplatte (18), welche zwei, je mit der Warmwasser- (34) und der Kaltwasserzuleitung (34') in Verbindung stehende Durchlässe (19, 28) aufweist und auf welcher ein relativ zu dieser beweglicher Steuerkörper (14) mit ebenfalls zwei Durchlässen (16) angeordnet ist, welcher durch einen um eine Welle (24) kippbaren Kipphebel (1) und einen am Kipphebel (1) vergesehenen drehbaren Handgriff (30) mittels eines in der Art eines Betätigungsfingers ausgeführten Teils (10, 11) bewegbar ist, wobei zwischen dem Steuerkörper (14) und dem inneren, im Kipphebel (1) gelagerten Teil (4) des drehbaren Handgriffes (30) Getriebeelemente (7) zwischengeschaltet sind, welche die Umwandlung des Drehwinkels des Handgriffs (30) in eine lineare Bewegung des Steuerkörpers (14) ergeben, wobei der Kippwinkel des Kipphebels (1) zur Steuerung einer zweiten, zu der genannten linearen Bewegung senkrechten Komponente der Bewegung des Steuerkörpers (14) bestimmt ist, dadurch gekennzeichnet, dass die Getriebeelemente (7) einen Führungskörper (9) enthalten, der um die Welle (24) kippbar und gleichzeitig entlang dieser Welle (24) verschiebbar ist (Fig. 1 bis 7).

2. Einhebel-Mischarmatur nach Anspruch 1, dadurch gekennzeichnet, dass der Führungskörper (9) mit Führungsflächen (9') versehen ist, die sich in einer Führung (5') des Gelenkes (5) des Kipphebels (1) parallel zur Welle (24) erstrecken (Fig. 1, 2).

3. Einhebel-Mischarmatur nach Anspruch 1, dadurch gekennzeichnet, dass die Getriebeelemente (7) aus einem mit dem Handgriff (30) fest verbundenenen Exzenterbolzen (8) und aus einer kulissenartigen, mit dem Exzenterbolzen (8) zusammen wirkenden Ausnehmung (8') im Führungskörper (9) bestehen, wobei die Flächen des Exzenterbolzens (8) derart ausgebildet sind, dass die Drehbewegung des Bedienungsteils kontinuierlich und wenigstens annähernd proportional in die lineare Bewegung des Steuerkörpers (14) umgesetzt wird (Fig. 1, 2, 6 und 7).

4. Einhebel-Mischarmatur nach Anspruch 1, dadurch gekennzeichnet, dass die Getriebeelemente (7) aus einem Zahnrad (32) und einer zugeordneten, am Führungskörper (a) vorgesehenen Zahnstange (33) bestehen, wobei das Zahnrad (32) mit dem drehbaren Handgriff bewegbar ist (Fig. 3).

5. Einhebel-Mischarmatur nach Anspruch 1, dadurch gekennzeichnet, dass die Getriebeelemente (7) aus einer Spindelhülse (38), einer Spindel (39) mit Gleitstück (40) und aus wenigstens einer Spindel (39) mit Gleistück (40) und aus wenigstens einer kulissenartigen Nut (41) bestehen, die im Gleitstück (40) ausgebildet ist, wobei die Spindelhülse (38) mit dem drehbaren Handgriff (30) und die Spindel (39), welche in einem inneren Gewinde der Spindelhülse (38) mit ihrem äusseren Gewinde drehbar und verschiebbar gelagert ist, mit dem Gleitstück (40) fest verbunden sind, und dass das Gleitstück (40) durch die Drehbewegung des drehbaren Handgriffes (30) in einer Führung (43) verschoben wird, wobei die kulissenartige Nut (41) mittels eines Bolzens (42) mit dem Steuerkörper (14) beweglich verbunden ist (Fig. 4, 5).

6. Einhebel-Mischarmatur nach Anspruch 5, dadurch gekennzeichnet, dass die inneren Flächen des Gleitstücks (40) Führungsflächen für den Führungskörper (9) bilden und in direktem Gleitkontakt mit diesem Führungskörper (9) sind und dass die mit der Welle (24) parallelen Flächen des Führungskörpers (9) Führungsflächen (9') bilden (Fig. 4, 5).

7. Einhebel-Mischarmatur nach Anspruch 1, dadurch gekennzeichnet, dass die feststehende Steuerplatte (18) mit zwei rechteckigen Durchlässen (19, 28) für Kalt- und Warmwasser versehen ist und dass sich die rechteckigen Profile der Durchlässe (19, 28) mit ihren Abgrenzungslinien in der Richtung der zueinander senkrechten Bewegungskomponenten des Steuerkörpers (14) erstrecken (Fig. 1, 2, 4, 5, 6, 7).

8. Einhebel-Mischarmatur nach Anspruch 1, dadurch gekennzeichnet, dass des drehbare Handgriff (30) mit einer Nase (30') für die Anzeige der Temperatureinstellung versehen ist (Fig. 3, 6).

9. Einhebel-Mischarmatur nach Anspruch 1, dadurch gekennzeichnet, dass der Kipphebel (1) unterhalb des drehbaren Handgriffes (30) mit einem Orientierungshebel (45) für die Anzeige der Kippbewegung für die Durchflussmengeneinstellung versehen ist (Fig. 6).

**Claims**

1. A single-arm mixer tap for controlling the rate of flow and the mixing ratio of hot and cold water, with a stationary control plate (18) comprising two ducts (19, 28) connected to the hot water supply line (34) and the cold water supply line (34') respectively, a control member (14) movable relative to the control plate (18) being disposed thereon and likewise comprising two ducts (16) and being actuable by a rocker arm (1) pivotable about a shaft (24) and by a rotatable handle (30) provided on the rocker arm (1) by means of a member (10, 11) constructed in the form of an actuating finger, and transmission elements (7), by which the angle of rotation of the handle (30) is converted into a linear movement of the control member (14), the transmission elements (7) being interposed between the control member (14) and the inner part (4) of the rotatable handle (30) mounted in the rocker arm (1), the rocking angle of the rocker arm (1) being intended to control a second component of the movement of the control member (14) at right angles to the said linear movement, characterized in that the transmission elements (7) comprise a guide member (9) tiltable about the shaft (24) and simultaneously displaceable along the said shaft (24) (Figs. 1 to 7).

2. A single-arm mixer tap according to Claim 1, characterized in that the guide member (9) is provided with guide surfaces (9') extending parallel to the shaft (24) in a guide (5') of the joint (5) of the rocker arm (1) (Figs. 1, 2).

3. A single-arm mixer tap according to Claim 1, characterized in that the transmission elements (7) comprise an eccentric pin (8) securely connected to the handle (30) and a recess (8') in the guide member (9) cooperating with the eccentric pin (8) being formed such that the rotary movement of the operating part is converted continuously and at least approximately proportionally into the linear movement of the control member (14) (Figs. 1, 2, 6 and 7).

4. A single-arm mixer tap according to Claim 1, characterized in that the transmission elements (7) comprise a gearwheel (32) and an associated toothed rack (33) provided on the guide member (9), the gearwheel (32) being movable with the rotatable handle (30) (Fig. 3).

5. A single-arm mixer tap according to Claim 1, characterized in that the transmission elements (7) comprise a spindle sleeve (38), a spindle (39) with a sliding member (40) and at least one groove (41) in the sliding member (40), the spindle sleeve (38) being rigidly connected to the rotatable handle (30) and the spindle (39), which is mounted rotatably and displaceably with an external thread thereof engaging an internal thread of the spindle sleeve (38), being rigidly connected to the sliding member (40), and the sliding member (40) is displaced in a guide (43) by the rotary movement of the rotatable handle (30), the groove (41) being displaceably connected to the control member (14) by means of a pin (42) (Fig. 4, 5).

6. A single-arm mixer tap according to Claim 5, characterized in that the inner surfaces of the sliding member (40) form guide surfaces for the guide member (9) and are in direct sliding contact with the said guide member (9), and the surfaces of the guide member (9) parallel with the shaft (24) form guide surfaces (9') (Figs. 4, 5).

7. A single-arm mixer tap according to Claim 1, characterized in that the stationary control plate (18) is provided with two rectangular ducts (19, 28) for cold and hot water, and the rectangular sections of the ducts (19, 28) lie with their boundary lines in the directions of the perpendicular movement components of the control member (14) (Figs. 1, 2, 4, 5, 6, 7).

8. A single-arm mixer tap according to Claim 1, characterized in that the rotatable handle (30) is provided with a nose (30') for displaying the temperature setting (Figs. 3, 6).

9. A single-arm mixer tap according to Claim 1, characterized in that the rocker arm (1) below the rotatable handle (30) is provided with an orientation lever (45) for displaying the rocking movement for the setting the rate of flow (Fig. 6).

**Revendications**

1. Robinet mélangeur à un levier pour régler le débit et le rapport de mélange entre l'eau chaude et l'eau froide, comportant une plaque de commande fixe (18) qui comporte deux passages (19, 28) en liaison respectivement avec l'arrivée d'eau chaude (34) et l'arrivée d'eau froide (34') et sur laquelle est disposé un corps de commande (14) également muni de deux passages (16) et mobile par rapport à cette plaque de commande, lequel corps peut être déplacé à l'aide d'un levier basculant (1) autour d'un axe (24) et d'une poignée rotative (30) prévue sur le levier basculant (1), au moyen d'un élément (10, 11) réalisé à la façon d'un doigt d'actionnement, des éléments de transmission (7) étant interposés entre le corps de commande (14) et la partie intérieure (4) de la poignée rotative (30) montée dans le levier basculant (1), lesquels éléments provoquent la transformation de la rotation de la poignée (30) en un mouvement linéaire du corps de commande (14), l'angle de basculement du levier basculant (1) servant à commander une seconde composante du mouvement du corps de commande (14) perpendiculaire au mouvement linéaire précité, caractérisé en ce que les éléments de transmission (7) comportent un corps de guidage (9) qui peut basculer autour de l'axe (24) et être en même temps déplacé le long de cet axe (24) (fig. 1 à 7).

2. Robinet mélangeur à un levier selon la revendication 1, caractérisé en ce que le corps de guidage (9) est pourvu de surfaces de guidage (9') qui s'étendent dans un guidage (5') de l'articulation (5) du levier basculant (1) parallèlement à l'axe (24) (fig. 1, 2).

3. Robinet mélangeur à un levier selon la revendication 1, caractérisé en ce que les éléments de transmission (7) sont constitués par une tige excentrée (8) solidaire de la poignée (30) et par un évidement (8') analogue à une coulisse, coopérant avec la tige excentrée (8) et ménagé dans le corps de guidage (9), les surfaces de la tige excentrée (8) étant réalisées de telle sorte que le mouvement de rotation de l'élément d'actionnement est transformé en mouvement linéaire du corps de commande (14) de façon continue et au moins approximativement proportionnelle (fig. 1, 2, 6 et 7).

4. Robinet mélangeur à un levier selon la revendication 1, caractérisé en ce que les éléments de transmission (7) sont constitués par une roue dentée (32) et une crémaillère (33) associée prévue sur le corps de guidage (9), la roue dentée (32) étant déplaçable par la poignée rotative (30) (fig. 3).

5. Robinet mélangeur à un levier selon la revendication 1, caractérisé en ce que les éléments de transmission (7) sont constitués par une douille de broche (38), une broche (39) avec un coulisseau (40) et au moins une rainure (4) analogue à une coulisse qui est réalisée dans le coulisseau (40), la douille de broche (38) étant solidaire de la poignée rotative (30) et la broche (39), qui est montée de façon à pouvoir tourner et se déplacer grâce à son filetage externe dans un taraudage de la douille de·broche (38), étant solidaire du coulisseau (40), et en ce que le coulisseau (40) est déplacé dans un guidage (43) par le mouvement de rotation de la poignée rotative (30), la rainure (41) analogue à une coulisse étant reliée de façon mobile au corps de commande (14) au moyen d'un bossage (42) (fig. 4, 5).

6. Robinet mélangeur à un levier selon la revendication 5, caractérisé en ce que les surfaces intérieures du coulisseau (40) constituent des surfaces de guidage pour le corps de guidage (9) et sont en contact coulissant direct avec ce corps de guidage (9), et les surfaces du corps de guidage (9) parallèles à l'axe (24) constituent des surfaces de guidage (9') (fig. 4, 5).

7. Robinet mélangeur à un levier selon la revendication 1, caractérisé en ce que la plaque de commande fixe (18) est pourvue de deux passages rectangulaires (19, 28) pour l'eau froide et l'eau chaude, et les profils rectangulaires des passages (19, 28) ont leurs lignes de délimitation qui s'étendent dans le sens des composantes de mouvement du corps de commande (14) qui sont perpendiculaires entre elles (fig. 1, 2, 4, 5, 6, 7).

8. Robinet mélangeur à un levier selon la revendication 1, caractérisé en ce que la poignée rotative (30) est munie d'un bec (30') pour indiquer le réglage de la température (fig. 3, 6).

9. Robinet mélangeur à un levier selon la revendication 1, caractérisé en ce que le levier basculant (1) est muni, en dessous de la poignée rotative (30) d'un levier d'orientation (45) pour indiquer le mouvement de basculement pour le réglage du débit (fig. 6).

FIG.1

FIG. 2

FIG. 3

FIG.4

FIG.5

FIG.6

FIG.7

FIG.8

FIG.9